(19) Europäisches Patentamt
European Patent Office
Office européen des brevets

(11) **EP 4 579 533 A1**

(12) **EUROPEAN PATENT APPLICATION**

(43) Date of publication:
**02.07.2025 Bulletin 2025/27**

(21) Application number: **24222096.0**

(22) Date of filing: **20.12.2024**

(51) International Patent Classification (IPC):
**G06N 3/088** (2023.01)     **G06N 3/0455** (2023.01)
**G06N 3/0475** (2023.01)     **G06N 3/084** (2023.01)
**G06N 3/0895** (2023.01)

(52) Cooperative Patent Classification (CPC):
**G06N 3/0455; G06N 3/0475; G06N 3/084;
G06N 3/088; G06N 3/0895**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.12.2023 US 202318396182**

(71) Applicant: **eBay Inc.
San Jose, CA 95125 (US)**

(72) Inventors:
• **KASMI, Lamia
San Jose, 95125 (US)**
• **LI, Zhiying
San Jose, 95125 (US)**
• **YIN, Weian
San Jose, 95125 (US)**
• **THIYAGARAJAN, Mukund
San Jose, 95125 (US)**

(74) Representative: **Müller-Boré & Partner
Patentanwälte PartG mbB
Friedenheimer Brücke 21
80639 München (DE)**

(54) **USER SEGMENTATION USING CONTRASTIVE LEARNING AUGMENTED BY USER-USER SCORING**

(57)    Some aspects relate to technologies for generating user segments for users of a listing platform using a neural network trained using contrastive learning augmented by user-user scores. In accordance with some aspects, user vectors are generated for users of a listing platform based on user data tracked by the listing platform. Additionally, user-user scores are generated for pairs of users based on user interactions with items on the listing platform. A neural network is trained using the user vectors and the user-user scores as training data. Once trained, the neural network is used to generate user embeddings by providing user vectors as input to the neural network. User segmentation is performed by clustering user embeddings into clusters with each cluster providing a user segment.

FIG. 1

**Description**

BACKGROUND

Listing platforms, such as e-commerce websites, are online platforms that offer products, services, digital content (e.g., music, videos, etc.), or other items to users. Given the vast number of items available, listing platforms include functionality, such as search, recommendation, and marketing content delivery, to assist users in finding items of interest on the platforms. Often, the listing platforms employ user segmentation techniques to support these functionalities. User segmentation is the process of dividing users into groups (i.e., user segments) based on various characteristics or behaviors of the users.

SUMMARY

Some aspects of the present technology relate to, among other things, generating user segments for users of a listing platform using a neural network trained using contrastive learning augmented by user-user scores. In accordance with some aspects, the neural network is initially trained on user vectors and user-user scores. The user vectors are generated for users of the listing platform based on user data tracked by the listing platform, including behavioral data regarding user interactions with the listing platform. The user-user scores are generated for pairs of users based on the users' interactions with the same items on the listing platform. In some cases, a user graph is generated where each node corresponds with each user and nodes are connected with edges having edge weights corresponding to the user-user scores.

The neural network is trained via contrastive learning using the user vectors and the user-user scores. The user-user scores are used to select positive samples (similar users) and negative samples (dissimilar users). User vectors from samples are provided as input to the neural network, which generates user embeddings. A loss is determined from the user embeddings and used to update the neural network. The loss is determined using a loss function (e.g., contrastive loss function, triplet loss function, quadruplet loss function, etc.) that causes the neural network to minimize a distance between user embeddings for positive samples and maximize a distance between user embeddings for negative samples.

Once trained, the neural network is used to generate user embeddings by providing user vectors as input to the neural network. User segmentation is performed by clustering user embeddings into clusters with each cluster providing a user segment. In some aspects, a generative model is used to generate text for a title or description for each user segment based on user data for users within each cluster.

This summary is provided to introduce a selection of concepts in a simplified form that are further described below in the Detailed Description. This summary is not intended to identify key features or essential features of the claimed subject matter, nor is it intended to be used as an aid in determining the scope of the claimed subject matter.

BRIEF DESCRIPTION OF THE DRAWINGS

The present technology is described in detail below with reference to the attached drawing figures, wherein:

FIG. 1 is a block diagram illustrating an exemplary system in accordance with some implementations of the present disclosure;

FIG. 2 is a block diagram showing an example process for training a neural network to generate user embeddings using a triplet loss in accordance with some implementations of the present disclosure;

FIG. 3 is a block diagram showing an example process for user segmentation by using a trained neural network to generate user embeddings and clustering the embeddings in accordance with some implementations of the present disclosure;

FIG. 4 is a flow diagram showing a method for performing user segmentation using contrastive learning augmented by user-user scoring in accordance with some implementations of the present disclosure;

FIG. 5 is a flow diagram showing a method for training a neural network to generate user embeddings for user segmentation in accordance with some implementations of the present disclosure;

FIG. 6 is a flow diagram showing a method for generating a title or description for a user segment in accordance with some implementations of the present disclosure; and

FIG. 7 is a block diagram of an exemplary computing environment suitable for use in implementations of the present disclosure.

DETAILED DESCRIPTION

## Overview

Understanding user behavior and preferences is essential in supporting various functions of listing platforms, including search results optimization, recommendation systems, and personalized marketing content delivery. Creating quality user segmentations is one way to gain this understanding. The finer and more accurate the user segmentation, the more precise the search results, recommendations, and marking content that can be provided to users. Among other things, one challenge for some listing platforms lies in identifying user segments in a scalable manner across a variety of item categories.

While user segmentation supports a number of tools for locating or otherwise discovering items of interest on listing platforms, shortcomings in existing user segmentation technologies often result in the consumption of an unnecessary quantity of computing resources (e.g., I/O costs, network packet generation costs, throughput, memory consumption, etc.). For instance, inaccurate user segmentation can result in less optimal search results being delivered to users, thereby causing the search system to fall short in allowing users to efficiently find items of interest. In the context of recommendations, poor user segmentation can result in recommendation systems selecting and providing recommended items that are not of interest to users. Deficient user segmentation can similarly result in marketing content delivery systems providing marketing content that is not relevant to users.

As a result of shortcomings in existing user segmentation technologies for search, users often have to submit multiple queries before finding desired items. For example, a user may issue a first query to a search engine that returns a set of search results for a given item. The user may browse the search results and select certain search results to access the corresponding items. Selection of items causes retrieval of the items from various content sources. Additionally, in some cases, applications supporting those items are launched in order to render the items. In the context of recommendation, when recommended items are insufficient, users may select certain items to view the item pages and discover the items are not what the user is seeking. This often results in the users turning to query-based searching, which can involve issuing numerous queries in an attempt to identify relevant items as discussed above.

These repetitive inputs result in increased computing resource consumption, among other things. For instance, repetitive user queries result in packet generation costs that adversely affect computer network communications. Each time a user issues a query, the contents or payload of the query is typically supplemented with header information or other metadata within a packet in TCP/IP and other protocol networks. Accordingly, when this functionality is multiplied by all the inputs needed to obtain the desired data, there are throughput and latency costs by repetitively generating this metadata and sending it over a computer network. In some instances, these repetitive inputs (e.g., repetitive clicks, selections, or queries) increase storage device I/O (e.g., excess physical read/write head movements on non-volatile disk) because each time a user inputs unnecessary information, such as inputting several queries, the computing system often has to reach out to the storage device to perform a read or write operation, which is time consuming, error prone, and can eventually wear on components, such as a read/write head. Further, if users repetitively issue queries, it is expensive because processing queries consumes a lot of computing resources. For example, for some search engines, a query execution plan may need to be calculated each time a query is issued, which requires a search system to find the least expensive query execution plan to fully execute the query. This decreases throughput and increases network latency, and can waste valuable time.

In the context of marketing content delivery, resources are wasted in the delivery of marketing content that is not relevant to users. The inefficiency arises from the dissemination of data to an inaccurate audience that results from insufficient user segmentation. This lack of targeted content delivery leads to an unnecessary strain on network bandwidth as content is transmitted to some users who have little or no interest in the information being presented. Additionally, storage resources are occupied by storing irrelevant content on servers, contributing to inflated data volumes and escalating operational costs. In addition to causing a wasteful allocation of computing resources, shortcomings in current user segmentation approaches also result in missed opportunities for marketers, as the potential impact of their messages is diluted amidst a sea of disinterested recipients.

Aspects of the technology described herein improve the functioning of the computer itself in light of these shortcomings in existing user segmentation technologies by training a neural network via contrastive learning augmented by user-user scores and employing the trained neural network to generate user embeddings that enable improved user segmentation.

In accordance with aspects of the technology described herein, a neural network is initially trained to generate user embeddings such that the user embeddings encode information regarding users, including their interests in items provided by a listing platform. The neural network is trained on a training dataset that includes: (1) user vectors comprising user features for each user; and (2) user-user scores that reflect users' degree of similarity.

A user vector is generated for each user based on user data tracked by a listing platform. The user data tracked by the listing platform and used to generate user vectors includes behavioral data regarding user interactions with the listing platform. In some cases, the behavioral data includes category-specific behavior data in which the user interactions are with items within a specific item category to enable category-specific user segmentation.

The user-user scores are generated between pairs of users based on the users' interactions with the same items on the listing platform. The more interactions with the same items between two users, the higher the user-user score. In some cases, the user-user scores are computed by weighting different types of user interactions reflecting higher importance for some types of user interactions (e.g., item purchases are more reflective of item interest than item views). In some configurations, a user graph is generated in which each node represents a user with edges between nodes with edge weights corresponding to user-user scores.

Using the user vectors and user-user scores, a neural network is trained via contrastive learning to generate user embeddings. In accordance with some aspects, the user-user scores are used to identify positive samples (similar users) and negative samples (dissimilar users). The neural network is trained by iteratively: selecting samples; providing user vectors from the samples as input to the neural network to generate user embeddings; computing a loss based on the user embeddings; and updating the neural network (e.g., network weights) based on the loss. The loss function used to train the neural network encourages the neural network to push user embeddings for positive samples closer together while pushing user embeddings for negative samples further apart.

Once trained, the trained neural network is used to generate user embeddings from the user vectors. In particular, the user vector for each of a number of users is provided as input to the neural network, which generates a user embedding for each of the users. The user embeddings are then clustered in the embedding space to provide clusters of users. Each cluster of users provides a user segment. In some aspects, a generative model is employed to generate text for a title and/or description for each user segment by providing, to the generative model, user data for users in each user segment.

Aspects of the technology described herein provide a number of improvements over existing user segmentation technologies. By training a neural network on similar and dissimilar users based on common item interactions, users are mapped into representations in an embedding space where the distances between similar customers are minimized while the distances between dissimilar ones are maximized. This allows for clustering users into highly similar user segments. Further, when taking into account category-specific data, finer user segments can be generated across a variety of item categories.

This improved user segmentation results in better computing resource consumption relative to existing technologies. For instance, the improved user segmentation provides for more relevant search results and recommendations, thereby allowing users to more quickly access relevant search results. This eliminates (or at least reduces) the repetitive user queries because the search results comprise items relevant to the users. Accordingly, aspects of the technology described herein decrease computing resource consumption, such as processing power and network bandwidth. For instance, a user query (e.g., an HTTP request) would only need to traverse a computer network once (or fewer times relative to existing technologies). In the context of marketing, marketing content is better tailored to users, thereby improving network bandwidth by reducing the amount of marketing content being delivered that is not relevant to users.

In like manner, aspects of the technology described herein improve storage device usage and disk I/O. As described above, the inadequate search results and recommendations resulting from insufficient user segmentation causes repetitive user queries. This, in turn, causes multiple traversals to disk. In contrast, aspects described herein reduce storage device I/O because the user provides a reduced amount of inputs so the computing system does not have to reach out to the storage device as often to perform a read or write operation. Accordingly, there is not as much wear on components, such as a read/write head, because disk I/O is substantially reduced. For marketing content delivery, the improved user segmentation reduces the amount of irrelevant content being stored and also reduces traversals to disk to retrieve the irrelevant marketing content.

**Example System for User Segmentation using Contrastive Learning Augmented by User-User Scoring**

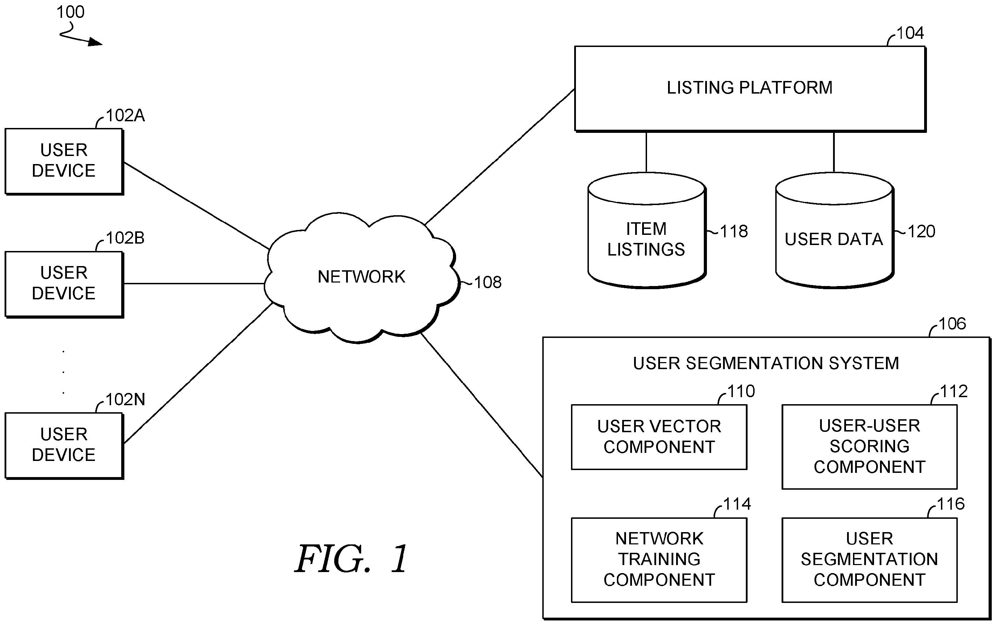

With reference now to the drawings, FIG. 1 is a block diagram illustrating an exemplary system 100 for performing user segmentation for a listing platform using a neural network trained via contrastive learning augmented by user-user scoring in accordance with implementations of the present disclosure. It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components, and in any suitable combination and location. Various functions described herein as being performed by one or more entities may be carried out by hardware, firmware, and/or software. For instance, various functions may be carried out by a processor executing instructions stored in memory.

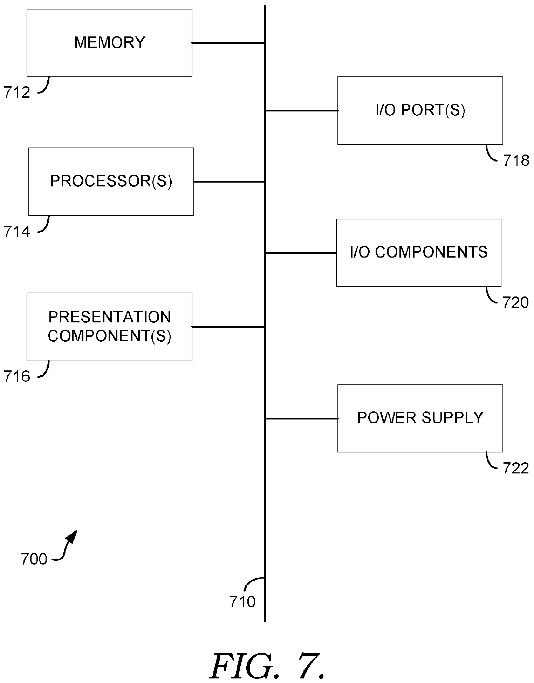

The system 100 is an example of a suitable architecture for implementing certain aspects of the present disclosure. Among other components not shown, the system 100 includes any number of user devices 102A-102N, a listing platform 104, a user segmentation system 106. Each of the user devices 102A-102N, the listing platform 104, and the user segmentation system 106 shown in FIG. 1 can comprise one or more computer devices, such as the computing device 700 of FIG. 7, discussed below. As shown in FIG. 1, the user devices 102A-102N, the listing platform 104, and the user segmentation system 106 can communicate via a network 108, which may include, without limitation, one or more local area networks (LANs) and/or wide area networks (WANs). Such networking environments are commonplace in offices, enterprise-wide computer networks, intranets, and the Internet. It should be understood that any number of user devices and servers may be employed within the system 100 within the scope of the present technology. Each may comprise a single device or multiple devices cooperating in a distributed environment. For instance, the listing platform 104 and the user segmentation system 106 could each be provided by multiple server devices collectively providing the functionality of the listing platform 104 and the user segmentation system 106 as described herein. Additionally, other components not shown may also be included within the network environment.

Each of the user devices 102A-102N can be a client device on the client-side of operating environment 100, while the listing platform 104 and the user segmentation system 106 can be on the server-side of operating environment 100. The listing platform 104 and/or the user segmentation system 106 can each comprise server-side software designed to work in conjunction with client-side software on the user devices 102A-102N so as to implement any combination of the features and functionalities discussed in the present disclosure. For instance, each of the user devices 102A-102N can include an application (not shown) for interacting with the listing platform 104 and/or the user segmentation system 106. The application can be, for instance, a web browser or a dedicated application for providing functions, such as those described herein. This division of operating environment 100 is provided to illustrate one example of a suitable environment, and there is no requirement for each implementation that any combination of the listing platform 104 and the user segmentation system 106 remain as separate entities. For instance, in some aspects, the user segmentation system 106 is a part of the listing platform 104. While the operating environment 100 illustrates a configuration in a networked environment with separate user devices, listing platform, and user segmentation system, it should be understood that other configurations can be employed in which aspects of the various components are combined.

Each of the user devices 102A-102N may comprise any type of computing device capable of use by a user. For example, in one aspect, a user device may be the type of computing device 700 described in relation to FIG. 7 herein. By way of example and not limitation, the user devices 102A-102N may each be embodied as a personal computer (PC), a laptop computer, a mobile or mobile device, a smartphone, a tablet computer, a smart watch, a wearable computer, a personal digital assistant (PDA), an MP3 player, global positioning system (GPS) or device, video player, handheld communications device, gaming device or system, entertainment system, vehicle computer system, embedded system controller, remote control, appliance, consumer electronic device, a workstation, or any combination of these delineated devices, or any other suitable device where notifications can be presented. A different user may be associated with each of the user devices 102A-102N and may interact with the listing platform 104 and/or the user segmentation system 106 via the user devices 102A-102N.

The listing platform 104 can be implemented using one or more server devices, one or more platforms with corresponding application programming interfaces, cloud infrastructure, and the like. The listing platform 104 generally provides, to the user devices 102A-102N, item listings describing items (physical or digital) available for purchase, rent, streaming, download, etc. For instance, the listing platform 104 could comprise an e-commerce platform, in which listed products or services are available for purchase by users of the user devices 102A-102N upon navigation to the listing platform 104. As other examples, the listing platform 104 could comprise a rental platform listing various items for rent (e.g., equipment, tools, real estate, vehicles, contract employees) or a media platform listing digital content items (e.g., digital content for streaming/download).

The functionality of the listing platform 104 includes provision of interfaces enabling surfacing of item listings for items to users of the listing platform 104. Item listings for items available for sale/rent/consumption via the listing platform 104 are stored by the item listings data store 118. Each item listing may include a description relating to an item comprising one or more of a price in a currency, reviews, images of the item, shipment options, a rating, a condition of the item, a size of the item, a color of the item, etc. In aspects, each item is associated with one or more categories including meta-categories and leaf categories. For example, the meta-categories are each divisible into subcategories (or branch categories), whereas leaf categories are not divisible.

In accordance with aspects of the technology described herein, the listing platform 104 tracks user data for users that interact with the listing platform 104 and stores the user data in a user data store 120. The user data tracked and stored for a user includes behavioral data regarding the user's interactions with the listing platform 104 via a user device, such as one of the user devices 102A-102N. The behavioral data can generally include information regarding any user interaction with the listing platform 104 via a user device. In some aspects, the behavioral data includes user interactions that are independent of any single item, such as, for instance, searching (e.g., search queries submitted, filtering/sorting search results), browsing, and engaging with content (e.g., marketing content). In some aspects, the behavioral data includes information regarding user interactions with specific items available via the listing platform (e.g., viewing an item, bidding on an item, watching an item, adding an item to a wish list, submitting a question for an item, posting a review on an item, adding an item to cart, purchasing an item, etc.).

In further aspects, the user data store 120 also stores non-behavioral data for users. Non-behavioral data includes any data regarding a user that is independent of the user's interactions with the listing platform 104. The non-behavioral data can include any type of user demographic, such as age, gender, geographic location, income, marital status, language, hobbies/interests. The non-behavioral data can also include information regarding the user device employed by a user to access the listing platform, such as the type of device (e.g., PC, mobile device, gaming console, etc.) and application used to access the listing platform 104 (e.g., browser, type of browser, dedicated app for the listing platform 104, etc.).

The user segmentation system 106 generates user segments for users of a listing platform using a neural network trained using contrastive learning augmented by user-user scores. As will be described in further detail below, in some aspects, the user segmentation system 106 generates user vectors for users of a listing platform based on user data tracked by the listing platform. The user segmentation system 106 also generates user-user scores for pairs of users based on user interactions with items on the listing platform. The user segmentation system 106 uses the user vectors and the user-user scores as training data to train a neural network. After training the neural network, the user segmentation system 106 uses the trained neural network to generate user embeddings by providing user vectors as input to the neural network. The user segmentation system 106 then clusters the user embeddings to generate user segments.

As shown in FIG. 1, the user segmentation system 106 includes a user vector component 110, a user-user scoring component 112, a network training component 114, and a user segmentation component 116. The components of the user segmentation system 106 may be in addition to other components that provide further additional functions beyond the features described herein. The user segmentation system 106 can be implemented using one or more server devices, one or more platforms with corresponding application programming interfaces, cloud infrastructure, and the like. While the user segmentation system 106 is shown separate from the listing platform 104 and each of the user devices 102A-102N in the configuration of FIG. 1, it should be understood that in other configurations, some of the functions of the user segmentation system 106 can be provided on the listing platform 104 and/or a user device 102A-102N.

In some aspects, the functions performed by components of the user segmentation system 106 are associated with one or more applications, services, or routines. In particular, such applications, services, or routines may operate on one or more user devices, servers, may be distributed across one or more user devices and servers, or be implemented in the cloud. Moreover, in some aspects, these components of the user segmentation system 106 may be distributed across a network, including one or more servers and client devices, in the cloud, and/or may reside on a user device. Moreover, these components, functions performed by these components, or services carried out by these components may be implemented at appropriate abstraction layer(s) such as the operating system layer, application layer, hardware layer, etc., of the computing system(s). Alternatively, or in addition, the functionality of these components and/or the aspects of the technology described herein can be performed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc. Additionally, although functionality is described herein with regards to specific components shown in example system 100, it is contemplated that in some aspects, functionality of these components can be shared or distributed across other components.

The user vector component 110 of the user segmentation system 106 generates a user vector for each user of the listing platform 104 based on user data tracked and stored in the user data store 120. In accordance with some aspects of the technology described herein, the user vector for a user is a feature vector comprising a number of features from user data for the user. Any of the user data stored in the user data store 120 for a user, as discussed hereinabove, can be employed to generate the user vector for the user. This can include behavioral data, non-behavioral data, or a combination therefore. Each portion of the behavioral data and/or non-behavioral data can form a feature of the user vector. In some cases, some or all of the features are compressed using an autoencoder when generating user vectors. Such compressed could, for instance, reduce the time required to process the user vectors (e.g., during network training).

In some aspects, the user vector component 110 uses general behavioral features to generate the user vectors. General behavioral features are features of the user vector based on behavioral data for user interactions with the listing platform 104 across items categories. In one particular configuration, each of these general behavioral features are tracked across various time windows and compressed using an autoencoder, for instance, to reduce the training time.

In some configurations, the user vector component 110 generates user vectors that are specific to a given item category. This allows for category-specific user segmentation. In such configurations, the user vector is generated, at least in part, on category-specific behavioral features (although in some aspects, category-specific user vectors are generated using both category-specific behavioral features and general behavioral features discussed above). Category-specific behavioral features are features of the user vector based on behavioral data identifying user interactions associated with a specific category of items. In one particular configuration, the user vector component 110 generates the user vector using three types of category-specific behavioral features. The first type of category-specific behavioral features comprises a set of category-specific behavioral features specific to the selected category collected across various time windows. The second type of category-specific behavioral features comprises a set of features that describe the average item embedding that the user interacted with within the selected category over a certain time period (e.g., the past 90 days).

In some aspects, the item embeddings are generated from a machine learning model that represents items using a multimodal approach concatenating item title representation, item image representation and leveraging item co-occurrences in sequences of item views from user sessions. However, other types of item embeddings can be employed. The third type of category-specific behavioral features is a breakdown at category level of items the user interacted on within the selected category.

The user-user scoring component 112 generates scores between pairs of users based on the users' interactions with items on the listing platform 104. These scores are referred to herein as user-user scores. In some aspects, the user-user score for a pair of users is determined as a function of counts of times the two users interacted with the same items. The user-user scoring component 112 accesses behavioral data for each user in the user data store 120 to determine these counts. The types of user interactions with items obtained from the user data store 112 can include, for instance, item views, bids, offers, watches, questions submitted for items, adding items to cart, and purchasing items, to name a few. In some instances, the user-user scoring component 112 determines the user-user scores based on items across item categories. In other instances, the user-user scoring component 112 determines the user-user scores based only on items within a specific item category.

In some configurations, the user-user scoring component 112 determines the user-user score between two users based on the users interacting with the same item(s) regardless of the type of interaction with each item. For instance, the first user could have added an item to a cart, while the second user could have added the item to a wish list. In other configurations, the user-user score is determined between two users based on the users interacting with the same item(s) only if the users had the same type of interaction for each item. For instance, both users viewing an item or both users purchasing an item. In such configurations, different types of user interactions with an item by the users are not counted (e.g., the first user adding an item to a cart and the second user adding the item to a wish list).

In some configurations, the user-user scoring component 112 applies different weights to different types of user interactions to determine the user-user scores. This reflects that some types of user interactions could be considered more important than other types of user interactions. By way of example only and not limitation, below is a formula for determining a user-user score w between two users, $i$ and $j$:

$$w_{ij} = 0.2 * w_{ij}^{\text{view}} + 0.25 * w_{ij}^{\text{bowa}} + 0.25 * w_{ij}^{\text{bc}} + 0.3 * w_{ij}^{\text{buy}}$$

where view comprises views for the same items; bowa comprises the following user interactions with the same items: bids, offers, watches, asking sellers a question; bc comprises the following user interactions with the same items: buy it now, add to cart; and buy comprises purchases of the same items. The score for user interaction k can be calculated as follows:

$$w_{ij}^{\text{k}} = N \frac{I_{ij}\log\left(I_{ij} + 1\right)}{\dfrac{S_i + S_j}{2}}$$

where $S_i$ is the size of the set of items that user $i$ interacted on, $S_j$ is the size of the set of items that user $j$ interacted, $I_{ij}$ is the size of the intersecting sets of items that user $i$ and $j$ interacted on, and $N$ a normalization factor to bring all user-user scores between 0 and 1.

In some aspects, the user-user scoring component 112 generates a user graph in which each node represents a user and two nodes are connected by an edge in the user graph based on the user's interactions with items. In particular, the user-user score between two users is used as an edge weight of the edge between the two users in the graph. In some configurations, two users are connected in the user graph if their user-user score is non-zero (i.e., the two users are connected in the graph if there have been any user interactions with the same items). In other configurations, two users are connected in the user graph only if the user-user score for the two users satisfies a non-zero threshold (i.e., the two users are connected in the graph only if a certain threshold level of user interactions with the same items has been satisfied).

The network training component 114 uses the user vectors generated by the user vector component 110 and the user-user scores from the user-user scoring component 112 to train a neural network to generate user embeddings that serve as representations of the users in an embedding space. An embedding space (sometimes referred to as a latent vector space) is a mathematical representation where user vectors are transformed by a neural network into user embeddings. A user embedding is a vector representation for a user in the embedding space of the neural network model. As will be described in further detail below, the embedding space facilitates clustering users based on, for instance, the geometric properties of their user embeddings in the embedding space. The neural network is trained such that similar users tend to have user embeddings that are close in proximity in the embedding space while dissimilar users tend to have user embeddings that are not close in proximity in the embedding space.

The neural network trained by the network training component 114 comprises a number of layers. In some aspects, the layers of the neural network include an input layer and at least one hidden layer generating user embeddings from user vectors provided as input to the input layer. Each layer comprises neurons. Different types of layers and networks connect neurons in different ways. Neurons can have weights, an activation function that defines the output of the neuron given an input (including the weights), and an output. The weights are the adjustable parameters that cause a network to produce a correct output.

In accordance with some aspects of the technology described, the network training component 114 trains the neural network using a contrastive learning approach in which the user vectors and user embeddings serve as training data. In particular, the network training component 114 selects positive and negative samples based on the user-user scores. Positive samples comprise pairs of users having user-user scores that satisfy a threshold, while negatives samples comprises pairs of users having user-user scores that don't satisfy the threshold. Various configurations can use a zero threshold or a non-zero threshold. In aspects in which a user-user graph is generated, positive samples can comprise pairs of users whose nodes are connected, while negative samples can comprise pairs of users whose nodes are not connected, regardless of edge weight (i.e., zero threshold). In further configurations, positive samples can comprise pairs of users whose nodes are connected in the user graph and whose edge weights satisfy a non-zero-threshold.

The neural training component 114 trains the neural network using the positive and negative samples in way that encourages the neural network to generate user embeddings from user vectors that minimizes the distance between user embeddings in the embedding space for positive samples while maximizing the distance between user embeddings in the embedding space for negative samples.

During training, weights associated with each neuron of the neural network can be updated. Originally, the neural network can comprise random weight values or pre-trained weight values that are adjusted during training. In one aspect, the neural network is trained using backpropagation to update the weights. The backpropagation process comprises a forward pass, a loss function, a backward pass, and a weight update. This process is repeated using the training data. For instance, each iteration could include: providing user vectors from one or more positive and/or negative samples as input to the neural network, which generates a user embedding for each user vector; determining a loss based on a comparison of the user embeddings; and updating the neural network based on the loss. The goal is to update the weights of each neuron (or other model component) to cause the neural network to produce user embeddings in which the user embeddings for similar users are located more closely in the embedding space, while the user embeddings for dissimilar users are located further apart in the embedding space. Once trained, the weight associated with a given neuron can remain fixed. The other data passing between neurons can change in response to a given input. Retraining the network with additional training data can update one or more weights in one or more neurons.

The network training component 114 can use any of a number of different loss functions to train the neural network. By way of example only and not limitation, the network training component 114 can use a contrastive loss function, a triplet loss function, or a quadruplet loss.

A contrastive loss function operates on a pair of users from a positive sample or a pair of users from a negative sample. In the case of a positive sample, an iteration can involve providing the user vectors for the two users from the positive sample as input to the neural network, the neural network generating a user embedding from each user vector, computing a loss based on the two user embeddings, and adjusting the weights of the neural network with the goal of minimizing the distance between the user embeddings in the embedding space. In the case of a negative sample, an iteration can involve providing the user vectors for the two users from the negative sample as input to the neural network, the neural network generating a user embedding from each user vector, computing a loss based on the two user embeddings, and adjusting the weights of the neural network with the goal of maximizing the distance between the user embeddings in the embedding space.

A triplet loss function operate on three users - an anchor user, a positive user (a positive example with respect to the anchor user; i.e., the anchor user and the positive user form a positive sample), and a negative user (a negative example with respect to the anchor user; i.e., the anchor user and the negative user form a negative sample). In other words, the triplet loss approach uses a positive sample and negative sample that share the same anchor user. An iteration using triplet loss can involve providing the user vectors for the three users as input to the neural network, generating a user embedding from each user vector, computing a loss based on the three user embeddings, and adjusting the weights of the neural network with the goal of minimizing the distance between the user embeddings for the anchor user and the positive user, while maximizing the distance between the user embeddings for the anchor user and the negative user. A quadruplet loss can be an extension of triplet loss in which a second negative user is also employed (i.e., a second negative example with respect to the anchor user; i.e., the anchor user and the second positive user form a second negative example).

In order to account for varying similarity between different pairs of users as reflected by user-user scores (i.e., higher user-user scores indicate greater similarity between the two users), in some configurations, the loss employs a penalty factor that is a function of the user-user scores between users. The penalty factor causes user embeddings for pairs of users with higher user-user scores to be pushed closer together in the embedding space relative to the user embeddings for other pairs of users with lower user-user scores. In other words, the penalty factor causes the neural network to be trained to generate user embeddings whose similarity in the embedding space is based on user-user scores.

In some aspects, the neural network trained by the network training component is a Siamese neural network. A Siamese neural network includes two or more identical networks/subnetworks that share the same weights and architecture and operate in tandem on separate inputs. For instance, in the case of contrastive loss for a positive sample, the Siamese neural network comprises two identical networks where the first network receives as input the user vector for a first user from the positive sample and outputs a user embedding for that first user and the second network receives as input the user vector for the second user from the positive sample and outputs a user embedding for that second user. In the case of triplet loss, the Siamese neural network comprises three identical networks: a first network generating a user embedding from the user vector for the anchor user; a second network generating a user embedding from the user vector for the positive user; and a third network generating a user embedding from the user vector for the negative user. During training, the weights of each network of the Siamese neural network are similarly updated based on the loss computed. In other words, the updated weights at each iteration are the same across the networks.

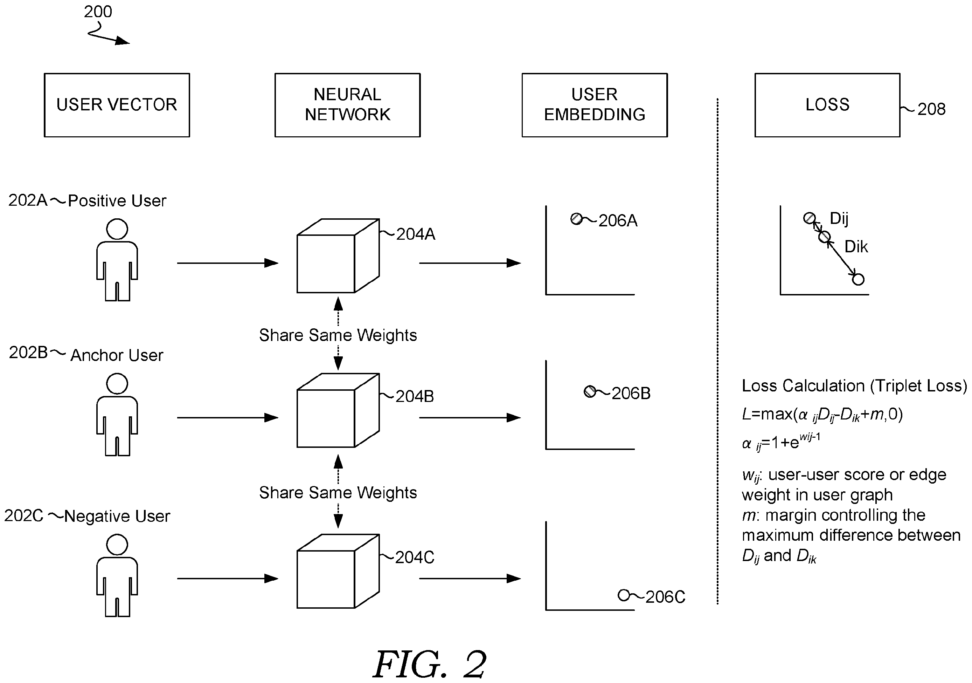

FIG. 2 provides a block diagram illustrating an example process 200 for an iteration of training a Siamese neural network to generate user embeddings using a triplet loss in accordance with some aspects, which could be performed, for instance, by the user segmentation component 116. FIG. 2 is provided as an example of triplet loss for illustration purpose only. As discussed above, other types of losses, such as contrastive loss and quadruplet loss, can be used in accordance with different aspects of the technology described herein.

As shown in FIG. 2, the Siamese neural network includes three networks 204A, 204B, and 204C that share the same weights. A user vector 202A for a positive user is provided as input to the network 204A, which generates a user embedding 206A for the positive user. A user vector 202B for an anchor user is provided as input to the network 204B, which generates a user embedding 206B for the anchor user. A user vector 202C for a negative user is provided as input to the network 204C, which generates a user embedding 206C for the negative user.

A loss 208 is determined based on the user embeddings 206A, 206B, 206C. In the current example, the loss 208 is based on the following triplet loss function:

$$L = \max\left(\alpha_{ij}D_{ij} - D_{ik} + m, 0\right)$$

where $i$ refers to the anchor user; $j$ refers to the positive user; $k$ refers to the negative user; $D_{ij}$ is the pairwise Euclidian distance in the embedding space between the user embedding for the anchor user and the user embedding for the positive user; $D_{ik}$ is the pairwise Euclidian distance in the embedding space between the user embedding for the anchor user and the user embedding for the negative user; and $m$ is a margin defining a distance threshold for which the similar and dissimilar pairs should separate in space. $\alpha_{ij}$ is a penalty factor on $D_{ij}$ used to account for the extent of similarity between the anchor user and the positive user based on their user-user score, and can be defined as follows:

$$\alpha_{ij} = 1 + e^{w_{ij}-1}$$

where $w_{ij}$ is the user-user score between the anchor user and the positive user.

With reference again to FIG. 1, the user segmentation component 116 employs the neural network trained by the network training component 114 to facilitate performing user segmentation by grouping users into clusters with each cluster of users comprising a user segment. In particular, the user segmentation component 116 provides the user vector generated by the user vector component 110 for each user as input to the trained neural network, which generates a user embedding for each user in the embedding space. The user segmentation component 116 then clusters the user embeddings in the embedding space, thereby providing clusters of users. The user segmentation component 116 can cluster user embeddings using any of a variety of clustering techniques, such as, for instance, centroid-based clustering (e.g., k-means clustering), similarity-based clustering (hierarchical clustering), density-based clustering (e.g., Density-Based Spatial Clustering of Applications (DBSCAN)), or distribution-based clustering (e.g., Gaussian mixture model (GMM)), to name a few.

In some aspects, the user segmentation component 116 also generates a title and/or description of each user segment (i.e., cluster of users). For instance, the user segmentation component 116 could generate a title for one user segment as "laptop lovers" and generate a title for another user segment as "mobile device lovers." The user segmentation component 116 can employ a generative model to generate the title/description for each user segment. To generate a title/description for a given user segment, information regarding users from that segment (e.g., user data from the user data store 120) is provided as input to the generative model, which generates text for a title and/or a description based on the user data. In some aspects, the user data is provided to the generative model with a prompt instructing the generative model on how to generate the title or description. This could include instructions on whether to generate a title and/or a description, as well as a length (e.g., number of words or sentence) of what is being generated.

The generative model can generally comprise a language model that includes a set of statistical or probabilistic functions that performs Natural Language Processing (NLP) in order to understand, learn, and/or generate human natural language content. For example, a language model can be a tool that determines the probability of a given sequence of words occurring in a sentence or natural language sequence. Simply put, it can be a model that is trained to predict the next word in a sentence. A language model is called a large language model (LLM) when it is trained on enormous amount of data. Some examples of LLMs are GOOGLE's BERT and OpenAI's GPT-3 and GPT-4. These models have capabilities ranging from writing a simple essay to generating complex computer codes - all with limited to no supervision. Accordingly, an LLM can comprise a deep neural network that is very large (billions to hundreds of billions of parameters) and understands, processes, and produces human natural language by being trained on massive amounts of text. These models can predict future words in a sentence letting them generate sentences similar to how humans talk and write.

In some configurations, the generative model used by the user segmentation component to generate titles/descriptions of user segments is a pre-trained model (e.g., GPT-4) that has not been fined-tuned. In other configurations, the generative model is a model that is built and trained from scratch or a pre-trained model that has been fine-tuned. In such configurations, the generative model can be trained or fine-tuned using training data. For instance, the training data can comprise pairs of user data for a group of users with titles/descriptions (e.g., titles/ manually generated to act as ground truth data for training purposes), and the generative model 208 is trained to fit the training data. During training, weights associated with each neuron can be updated. Originally, the generative model can comprise random weight values or pre-trained weight values that are adjusted during training. In one aspect, the generative model is trained using backpropagation. The backpropagation process comprises a forward pass, a loss function, a backward pass, and a weight update. This process is repeated using the training data. For instance, each iteration could include providing user data for a group of users as input to the model, generating an output by the generative model, comparing (e.g., computing a loss) the model output and the title/description paired with the input user data, and updating the model based on the comparison. The goal is to update the weights of each neuron (or other model component) to cause the generative model to produce useful titles and/or descriptions from user data for a group of users. Once trained, the weight associated with a given neuron can remain fixed. The other data passing between neurons can change in response to a given input. Retraining the network with additional training data can update one or more weights in one or more neurons.

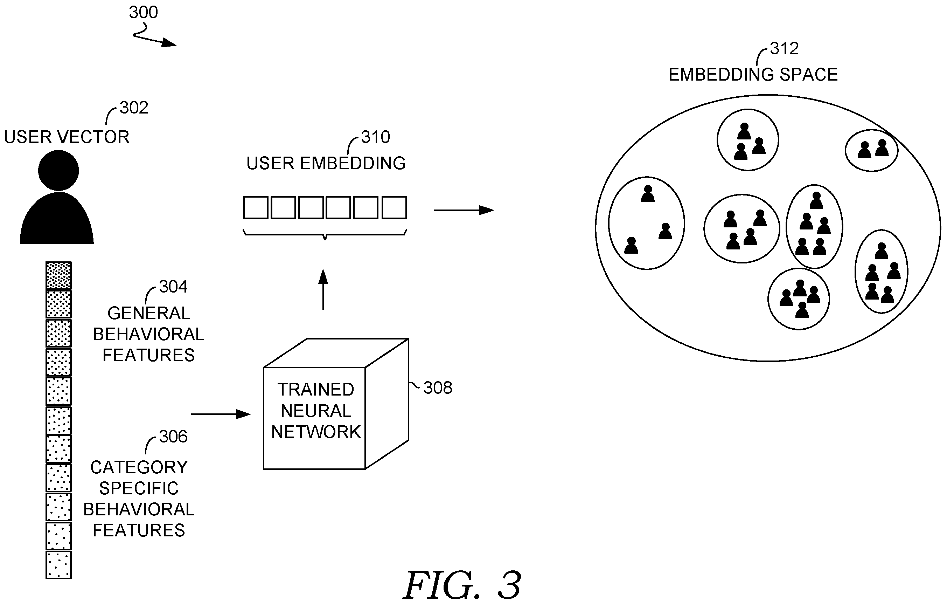

FIG. 3 provides a block diagram showing an example process 300 for using a trained neural network for user segmentation in accordance with some aspects, which could be performed, for instance, by the user segmentation component 116. As shown in FIG. 3, a user vector 302 is provided for a user. The user vector 302 in this example includes a set of features that includes general behavioral features 304 and category-specific behavioral features 306. Because the user vector 302 in this example includes category-specific behavioral features, it supports category-specific user segmentation. It should be understood that the user vector 302 is provided by way of example only and not limitation. In other aspects, a user vector could include any combination of general behavioral features, category-specific behavioral features, and non-behavioral features (e.g., user demographics).

The user vector 302 is provided as input to a trained neural network 308 (e.g., a neural network trained by the network training component 114 of FIG. 1). The trained neural network 308 generates a user embedding 310 for the user, which provides a numerical representation of the user in an embedding space 312. Similarly, user vectors for other users are provided as input to the trained neural network 308, which generates a user embedding for each user. User clusters are generated by clustering the user embeddings in the embedding space 312. Each of the user clusters in the embedding space 312 comprise a user segment. Although not shown in FIG. 3, a title and/or description can be generated for each user segment. For instance, user data for a cluster of users could be provided as input to a generative model, which outputs a title and/or description of the user segment based on the user data.

**Example Methods for User Segmentation using Contrastive Learning Augmented by User-User Scoring**

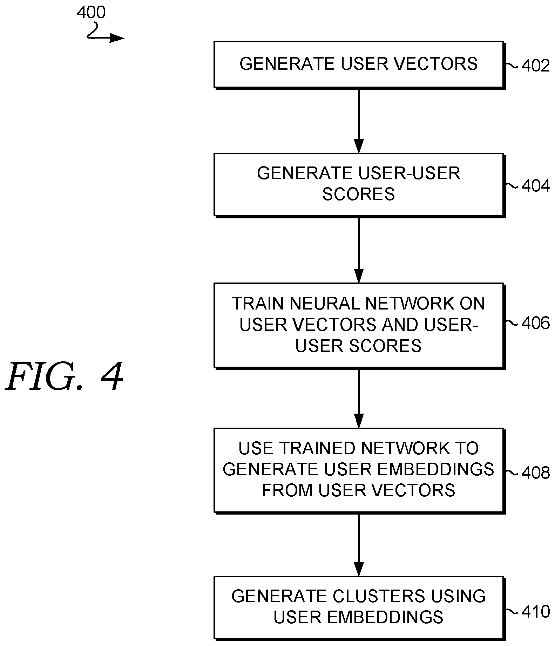

With reference now to FIG. 4, a flow diagram is provided that illustrates an overall method 400 for performing user segmentation using contrastive learning augmented by user-user scoring. The method 400 may be performed, for instance, by the user segmentation system 106 of FIG. 1. Each block of the method 400 and any other methods described herein comprises a computing process performed using any combination of hardware, firmware, and/or software. For instance, various functions can be carried out by a processor executing instructions stored in memory. The methods can also be embodied as computer-usable instructions stored on computer storage media. The methods can be provided by a standalone application, a service or hosted service (standalone or in combination with another hosted service), or a plug-in to another product, to name a few.

As shown at block 402, user vectors are generated for users of a listing platform. The user vector for a given user is generated based on user data tracked by the listing platform for that given user. The user data can include behavioral data regarding user interactions with the listing platform. In some instances, the behavioral data comprises general behavioral data that includes user interactions with items listed by the listed platform across all item categories and/or category-specific behavioral data that only includes user interactions with items within a specific item category. The user data can further include non-behavioral data, such as user demographics.

User-user scores are generated between pairs of users, as shown at block 404. The user-user score for a given pair of users is determined based on the two user's interactions with the same items listed on the listing platform. In some cases, different types of user interactions by the two users with the same item are counted when determining the user-user score; while in other cases, only the same type of user interaction by the two users is counted when determining the user-user score. In some configurations, the user-user score is generated by applying different weights to different types of user interactions.

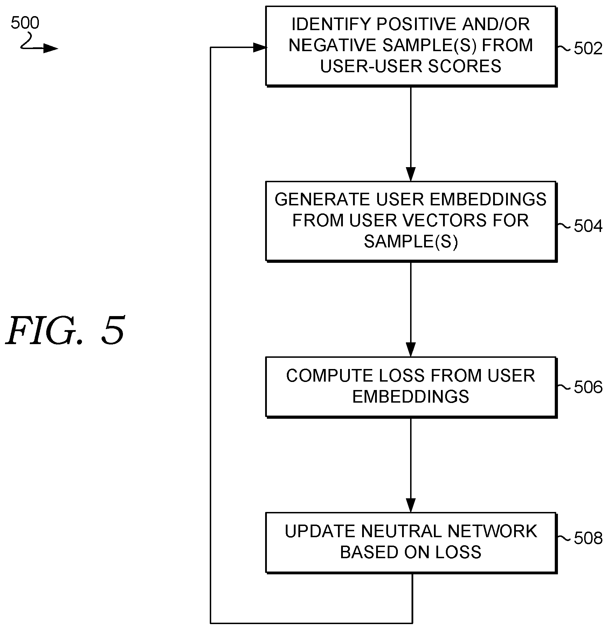

A neural network is trained using the user vectors and the user-user scores as training data, as shown at block 406. In particular, the user-user scores are used to identify positive samples and negative samples. Given the positive and negative samples, the neural network is trained by iteratively selecting samples, providing user vectors from the samples as input to the neural network to generate user embeddings, computing a loss based on the user embeddings, and updating the neural network (e.g., network weights) based on the loss. In accordance with some aspects, the neural network is trained at block 406 using an approach such as the method 500 described below with reference to FIG. 5.

As shown at block 408, the trained neural network resulting from the training at block 406, is used to generate user embeddings from user vectors. In particular, the user vector for each of a number of users is provided as input to the neural network, which generates a user embedding for each of the users. The user embeddings are clustered in the embedding space to provide clusters of users, as shown at block 410. Each cluster of users provides a user segment. The clustering can be performed using a clustering technique, such as, for instance, centroid-based clustering (e.g., k-means clustering), similarity-based clustering (hierarchical clustering), density-based clustering (e.g., Density-Based Spatial Clustering of Applications (DBSCAN)), or distribution-based clustering (e.g., Gaussian mixture model (GMM)), to name a few. In some configurations, a title and/or description is also generated for each user segment.

FIG. 5 is a flow diagram showing a method 500 for training a neural network. The method 500 could be performed, for instance, by the network training component 114 of FIG. 1. As shown at block 502, one or more positive samples and/or negative samples are obtained based on user-user scores generated between pairs of users who have interacted with a listing platform. A positive sample identifies a pair of users whose user-user score satisfies a threshold (which could be zero or non-zero). A negative sample identifies a pair of users whose user-user scores do not satisfy the threshold. In some cases, the user-user scores are edge weights from a user graph. The sample(s) obtained at block 502 are based on the type of loss being employed (e.g., contrastive loss, triplet loss, quadruplet loss, etc.). By way of example only and not limitation: in the case of a contrastive loss function, a positive sample or a negative sample is obtained; in the case of triplet loss, both a positive sample (i.e., an anchor user and a positive user) and a negative sample (i.e., the anchor user and a negative user) are obtained; and in the case of a quadruplet loss, a positive sample (i.e., an anchor user and a positive user) and two negative samples (i.e., the anchor user and two different negative users) are obtained.

The user vectors from the sample(s) obtained at block 502 are provided as input to the neural network to generate a user embedding for each user, as shown at block 504. A loss is computed based on the user embeddings, as shown at block 506. The loss determined at block 506 uses a loss function based on the type of loss being used, such as for instance, a contrastive loss function, a triplet loss function, quadruplet loss function, etc.). In some aspects, the loss function applies a penalty factor to a positive sample that is based on the user-user score between two users to account for the extent of similarity between the two users as reflected by their user-user score. The neural network is updated at block 508 based on the loss determined at block 506, for instance, by updating weights of the neural network using backpropagation. As shown by the return to block 502, the process of updating the neural network is repeated over multiple iterations using various samples from the training data (i.e., the user vectors and user-user scores).

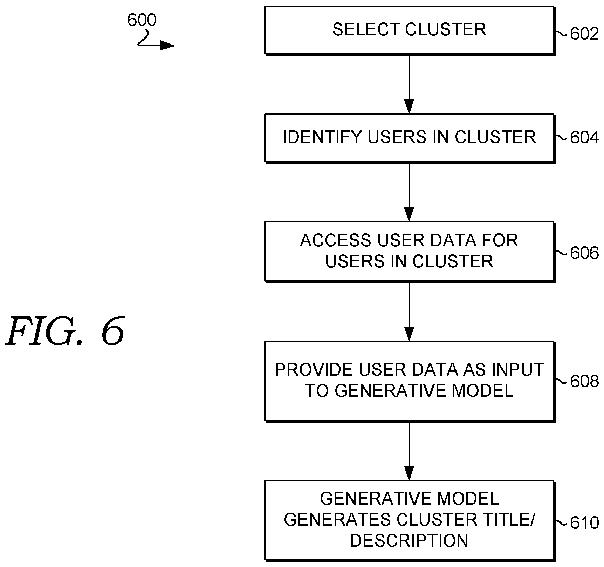

FIG. 6 is a flow diagram showing a method 600 for naming a user segment. The method 600 could be performed, for instance, by the user segmentation component 116 of FIG. 1. As shown at block 602, a cluster of users is selected. Users in the cluster are identified at block 604, and user data for those users is accessed as shown at block 606. The user data can be obtained, for instance, from a user data store of a listing platform that stores information regarding user interactions with the listing platform. As shown at block 608, the user data is provided as input to a generative model, which can comprise an LLM trained to generate a title and/or a description based on user data for a collection of users. Given the user data, the generative model generates text for a title and/or a description for the cluster of users.

**Exemplary Operating Environment**

Having described implementations of the present disclosure, an exemplary operating environment in which embodiments of the present technology may be implemented is described below in order to provide a general context for various aspects of the present disclosure. Referring initially to FIG. 7 in particular, an exemplary operating environment for implementing embodiments of the present technology is shown and designated generally as computing device 700. Computing device 700 is but one example of a suitable computing environment and is not intended to suggest any limitation as to the scope of use or functionality of the technology. Neither should the computing device 700 be interpreted as having any dependency or requirement relating to any one or combination of components illustrated.

The technology may be described in the general context of computer code or machine-useable instructions, including computer-executable instructions such as program modules, being executed by a computer or other machine, such as a personal data assistant or other handheld device. Generally, program modules including routines, programs, objects, components, data structures, etc., refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output (I/O) ports 718, input/output components 720, and illustrative power supply 722. Bus 710 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. The inventors recognize that such is the nature of the art, and reiterate that the diagram of FIG. 7 is merely illustrative of an exemplary computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media. Computer storage media includes both volatile and nonvolatile, removable and non-removable media implemented in any method or technology for storage of information such as computer-readable instructions, data structures, program modules or other data.

Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. The terms "computer storage media" and "computer storage medium" do not comprise signals per se.

Communication media typically embodies computer-readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile and/or nonvolatile memory. The memory may be removable, non-removable, or a combination thereof. Exemplary hardware devices include solid-state memory, hard drives, optical-disc drives, etc. Computing device 700 includes one or more processors that read data from various entities such as memory 712 or I/O components 720. Presentation component(s) 716 present data indications to a user or other device. Exemplary presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc. The I/O components 720 may provide a natural user interface (NUI) that processes air gestures, voice, or other physiological inputs generated by a user. In some instance, inputs may be transmitted to an appropriate network element for further processing. A NUI may implement any combination of speech recognition, touch and stylus recognition, facial recognition, biometric recognition, gesture recognition both on screen and adjacent to the screen, air gestures, head and eye-tracking, and touch recognition associated with displays on the computing device 700. The computing device 700 may be equipped with depth cameras, such as, stereoscopic camera systems, infrared camera systems, RGB camera systems, and combinations of these for gesture detection and recognition. Additionally, the computing device 700 may be equipped with accelerometers or gyroscopes that enable detection of motion.

The present technology has been described in relation to particular embodiments, which are intended in all respects to be illustrative rather than restrictive. Alternative embodiments will become apparent to those of ordinary skill in the art to which the present technology pertains without departing from its scope.

Having identified various components utilized herein, it should be understood that any number of components and arrangements may be employed to achieve the desired functionality within the scope of the present disclosure. For example, the components in the embodiments depicted in the figures are shown with lines for the sake of conceptual clarity. Other arrangements of these and other components may also be implemented. For example, although some components are depicted as single components, many of the elements described herein may be implemented as discrete or distributed components or in conjunction with other components, and in any suitable combination and location. Some elements may be omitted altogether. Moreover, various functions described herein as being performed by one or more entities may be carried out by hardware, firmware, and/or software, as described below. For instance, various functions may be carried out by a processor executing instructions stored in memory. As such, other arrangements and elements (e.g., machines, interfaces, functions, orders, and groupings of functions) can be used in addition to or instead of those shown.

Embodiments described herein may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of embodiments of the technology is described with specificity herein to meet statutory requirements. However, the description itself is not intended to limit the scope of this patent. Rather, the inventors have contemplated that the claimed subject matter might also be embodied in other ways, to include different steps or combinations of steps similar to the ones described in this document, in conjunction with other present or future technologies. Moreover, although the terms "step" and/or "block" may be used herein to connote different elements of methods employed, the terms should not be interpreted as implying any particular order among or between various steps herein disclosed unless and except when the order of individual steps is explicitly described.

For purposes of this disclosure, the word "including" has the same broad meaning as the word "comprising," and the word "accessing" comprises "receiving," "referencing," or "retrieving." Further, the word "communicating" has the same broad meaning as the word "receiving," or "transmitting" facilitated by software or hardware-based buses, receivers, or transmitters using communication media described herein. In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (a or b thus includes either a or b, as well as a and b).

For purposes of a detailed discussion above, embodiments of the present technology are described with reference to a distributed computing environment; however, the distributed computing environment depicted herein is merely exemplary. Components can be configured for performing novel embodiments of embodiments, where the term "configured for" can refer to "programmed to" perform particular tasks or implement particular abstract data types using code. Further, while embodiments of the present technology may generally refer to the technical solution environment and the schematics described herein, it is understood that the techniques described may be extended to other implementation contexts.

From the foregoing, it will be seen that this technology is one well adapted to attain all the ends and objects set forth above, together with other advantages which are obvious and inherent to the system and method. It will be understood that certain features and subcombinations are of utility and may be employed without reference to other features and subcombinations. This is contemplated by and is within the scope of the claims.

**Claims**

1.  One or more computer storage media storing computer-useable instructions that, when used by one or more computing devices, cause the one or more computing devices to perform operations, the operations comprising:

    generating a plurality of user vectors for a plurality of users based on user data tracked by a listing platform;
    generating a plurality of user-user scores among the plurality of users based on user interactions with items on the listing platform;
    training a neural network to generate user embeddings using the plurality of user vectors and the plurality of user-user scores to provide a trained neural network;
    causing the trained neural network to generate a plurality of user embeddings by providing at least a portion of the plurality of user vectors as input to the trained neural network; and
    generating a plurality of clusters using at least a portion of the plurality of user embeddings.

2.  The one or more computer storage media of claim 1, wherein each user vector from the plurality of user vectors comprises one or more selected from the following: one or more general behavioral features; one or more category-specific behavioral features; and one or more non-behavioral features.

3.  The one or more computer storage media of claim 1 or 2, wherein at least a portion of the user data is compressed using an autoencoder when generating the plurality of user vectors.

4. The one or more computer storage media of any one of the preceding claims, wherein the plurality of user-user scores are generated by applying different weights to different types of user interactions with items on the listing platform; and/or wherein the plurality of user-user scores are generated by using only user interactions with items within a specified item category.

5. The one or more computer media of any one of the preceding claims, wherein generating the plurality of user-user scores comprises generating a user graph in which each node of the user graph corresponds to a user from the plurality of users and nodes are connected with edges having edge weights corresponding to the user-user scores.

6. The one or more computer storage media of any one of the preceding claims, wherein the neural network comprises a Siamese network.

7. The one or more computer storage media of any one of the preceding claims, wherein training the neural network comprises:

identifying positive samples and negative samples based on the user-user scores; and
employing a loss function that minimizes a distance between embeddings for positive samples and maximizes a distance between embeddings for negative samples, wherein the loss function may optionally comprise a penalty factor that is a function of the user-user scores.

8. The one or more computer storage media of any one of the preceding claims, wherein the operations further comprise:

selecting a first cluster of users;
accessing a portion of the user data tracked by the listing platform for users from the cluster of users; and
causing a generative model to generate text for a title and/or a description of the first cluster of users by providing the portion of the user data as input to the generative mode.

9. A computer-implemented method comprising:

generating a plurality of user vectors for a plurality of users from user data tracked by a listing platform, the user data comprising general behavioral data and category-specific behavioral data, the category-specific behavioral data corresponding to items on the listing platform within a specified item category;
generating a user graph in which each node corresponds to a user from the plurality of users and nodes are connected with edges having edge weights corresponding to user-user scores determined by applying different weightings to different types of user interactions with items on the listing platform;
employing the plurality of user vectors and the user graph as training data to train a neural network over a plurality of iterations to provide a trained neural network, each iteration comprising:

selecting one or more positive samples and/or one or more negative samples based on node connections in the user graph;
causing the neural network to generate a set of user embeddings from user vectors corresponding to each user from the one or more positive samples and/or one the one or more negative samples;
determining a loss based on the set of user embeddings, and
updating the neural network based on the loss;

using the trained neural network to generate a plurality of user embeddings by providing at least a portion of the plurality of user vectors as input to the trained neural network; and
generating a plurality of user segments by clustering user embeddings from the plurality of user embeddings.

10. The computer-implemented method of claim 9, wherein the user-user scores are determined by using only user interactions with items within the specified item category.

11. The computer-implemented method of claim 9 or 10, wherein a positive sample from the one or more positive samples comprises a first pair of users connected in the user graph and a negative sample from the one or more negative samples comprises a second pair of users not connected in the user graph, and/or wherein a positive sample from the one or more positive samples comprises a first pair of users having an edge weight in the user graph satisfying a threshold and a negative sample from the one or more negative samples comprises a second pair of users not connected in the user graph or having an edge weight in the user graph not satisfying the threshold.

12. The computer-implemented method of any one of claims 9 to 11, wherein the neural network comprises a Siamese neural network having three subnetworks; wherein selecting the one or more positive samples and/or the one or more negative samples comprises selecting an anchor user, a positive user, and a negative user; wherein the loss comprises a triplet loss, and wherein the loss may optionally be determined using a loss function that comprises a penalty factor that is a function of the user-user scores.

13. A computer system comprising:

a processor; and
a computer storage medium storing computer-useable instructions that, when used by the processor, causes the computer system to perform operations comprising:

generating training data comprising a plurality of user vectors and a plurality of user-user scores, the plurality of user vectors generated for a plurality of users based on user data tracked by a listing platform, the plurality of user-user scores generated between pairs of users from the plurality of users based on user interactions with items on the listing platform;
training a neural network using the training data to provide a trained neural network;
causing the neural network to generate a plurality of user embeddings from at least a portion of the user vectors; and
generating a plurality of user segments by clustering user embeddings from the plurality of user embeddings.

14. The computer system of claim 13, wherein the plurality of user vectors are generated using category-specific behavioral features associated with items from a specific item category; and/or wherein the loss function comprises a penalty factor that is a function of the user-user scores.

15. The computer system of claim 13 or 14, wherein the neural network is trained by:

identifying positive samples and negative samples based on the user-user scores; and
employing a loss function that minimizes a distance between embeddings for positive samples and maximizes a distance between embeddings for negative samples.

FIG. 1

200

| USER VECTOR | NEURAL NETWORK | USER EMBEDDING | LOSS ~208 |

202A ~ Positive User

~204A

Share Same Weights

202B ~ Anchor User

~204B

Share Same Weights

202C ~ Negative User

~204C

~206A

~206B

~206C

Dij
Dik

Loss Calculation (Triplet Loss)

$L = \max(\alpha_{ij} D_{ij} - D_{ik} + m, 0)$

$\alpha_{ij} = 1 + e^{w_{ij}-1}$

$w_{ij}$: user-user score or edge weight in user graph
$m$: margin controlling the maximum difference between $D_{ij}$ and $D_{ik}$

*FIG. 2*

EP 4 579 533 A1

*FIG. 3*

EP 4 579 533 A1

400

GENERATE USER VECTORS 402

GENERATE USER-USER SCORES 404

TRAIN NEURAL NETWORK ON USER VECTORS AND USER-USER SCORES 406

USE TRAINED NETWORK TO GENERATE USER EMBEDDINGS FROM USER VECTORS 408

GENERATE CLUSTERS USING USER EMBEDDINGS 410

*FIG. 4*

500

*FIG. 5*

IDENTIFY POSITIVE AND/OR NEGATIVE SAMPLE(S) FROM USER-USER SCORES ~502

GENERATE USER EMBEDDINGS FROM USER VECTORS FOR SAMPLE(S) ~504

COMPUTE LOSS FROM USER EMBEDDINGS ~506

UPDATE NEUTRAL NETWORK BASED ON LOSS ~508

EP 4 579 533 A1

600

```
┌─────────────────────────────┐
│      SELECT CLUSTER         │ ~602
└─────────────────────────────┘
              │
              ▼
┌─────────────────────────────┐
│   IDENTIFY USERS IN CLUSTER │ ~604
└─────────────────────────────┘
              │
              ▼
┌─────────────────────────────┐
│     ACCESS USER DATA FOR    │ ~606
│       USERS IN CLUSTER      │
└─────────────────────────────┘
              │
              ▼
┌─────────────────────────────┐
│  PROVIDE USER DATA AS INPUT │ ~608
│     TO GENERATIVE MODEL     │
└─────────────────────────────┘
              │
              ▼
┌─────────────────────────────┐
│      GENERATIVE MODEL       │ ~610
│  GENERATES CLUSTER TITLE/   │
│        DESCRIPTION          │
└─────────────────────────────┘
```

*FIG. 6*

FIG. 7.

EP 4 579 533 A1

Europäisches
Patentamt

European
Patent Office

Office européen
des brevets

# EUROPEAN SEARCH REPORT

**Application Number**

EP 24 22 2096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI BOYU ET AL: "SGCCL: Siamese Graph Contrastive Consensus Learning for Personalized Recommendation", PROCEEDINGS OF THE 23RD INTERNATIONAL MIDDLEWARE CONFERENCE DOCTORAL SYMPOSIUM, ACMPUB27, NEW YORK, NY, USA, 27 February 2023 (2023-02-27), pages 589-597, XP058990134, DOI: 10.1145/3539597.3570422 ISBN: 978-1-4503-9942-5 * page 589 - page 594 * * figures 1-4 * | 1-15 | INV. G06N3/088 G06N3/0455 G06N3/0475 G06N3/084 G06N3/0895 |
| A | MENGYUAN JING ET AL: "Contrastive Self-supervised Learning in Recommender Systems: A Survey", ARXIV.ORG, CORNELL UNIVERSITY LIBRARY, 201 OLIN LIBRARY CORNELL UNIVERSITY ITHACA, NY 14853, 17 March 2023 (2023-03-17), XP091461451, * page 1 - page 26 * | 1-15 | |
| A | US 2023/385607 A1 (BISWAS PROSENJIT [IN] ET AL) 30 November 2023 (2023-11-30) * paragraph [0001] - paragraph [0101] * * figures 1-6 * | 1-15 | **TECHNICAL FIELDS SEARCHED (IPC)** G06N |

The present search report has been drawn up for all claims

| Place of search | Date of completion of the search | Examiner |
|---|---|---|
| The Hague | 9 May 2025 | Keresztury, Bence |

EPO FORM 1503 03.82 (P04C01)

## ANNEX TO THE EUROPEAN SEARCH REPORT
## ON EUROPEAN PATENT APPLICATION NO.

EP 24 22 2096

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| US 2023385607 A1 | 30-11-2023 | NONE | |

For more details about this annex : see Official Journal of the European Patent Office, No. 12/82

EPO FORM P0459